# EUROPEAN PATENT APPLICATION

(11) **EP 1 097 658 A1**
(43) Date of publication of application: **09.05.2001**
(21) Application number: 99122231.6
(22) Date of filing: 08.11.1999
(51) Int. Cl.: A47B 21/04

(54) **File holder**

(71) Applicant: Huang, Yuh-Chwen, Yuanlin-chen, Chuangghua Hsien (TW)
(72) Inventor: Huang, Yuh-Chwen, Yuanlin-chen, Chuangghua Hsien (TW)
(74) Representative: Leson, Thomas Johannes Alois, Dipl.-Ing.

(57) **Abstract**

A file holder includes an attachment member for being attached to a monitor. A first pivotable member is pivotably connected to a first tube on the attachment member, and a second pivotably member is pivotably connected to a second tube on the first pivotable member. A clamp device is slidably mounted to the second pivotable member. The first pivotable member is pivotable about the first tube on the attachment member, the second pivotable member is pivotable about the second tube on the first pivotable member so that the clamp device is easily shifted to a desired position.

## Description

### FIELD OF THE INVENTION

The present invention relates to a file holder, and more particularly, to a foldable file holder attached to a side of a monitor and involving two pivotable members so as to be adjusted at desired position.

### BACKGROUND OF THE INVENTION

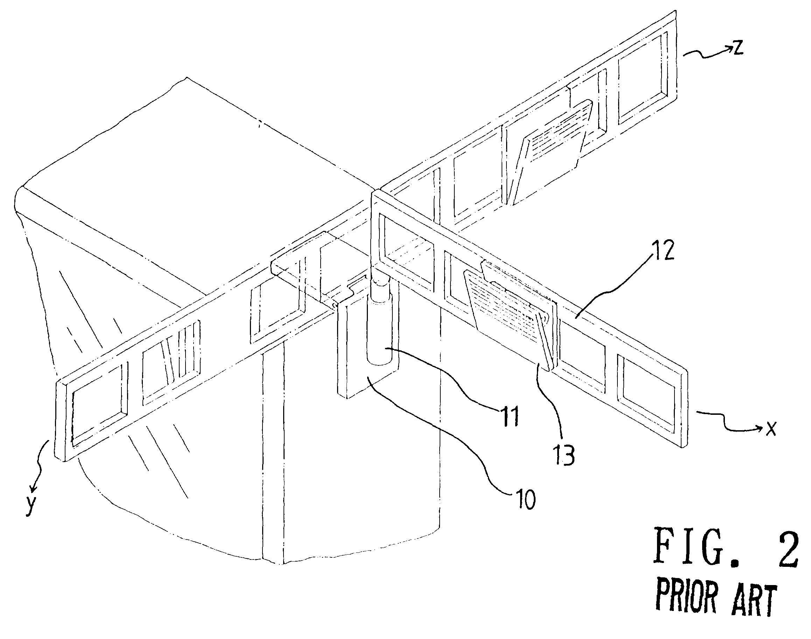

A conventional file holder 1 used with a monitor is shown in Figs. I and 2 and generally includes an attachment member 10 which is used to be connected to a side of a monitor as shown in Fig. 2, a tube 11 connected on the attachment member 10, and a pivotable member 12 which is pivotably connected to the tube 11. A clamp means 13 is connected to the pivotably member 12 for clamping document thereby. The pivotable member 12 can be pivoted about the tube 11 and positioned at X, Y, and Z position as shown in Fig. 2. A normal position when in use of the pivotable member 12 is at the position X, and when not in use, the pivotable member 12 can be positioned at position Y or Z. Nevertheless, the clamp means 13 is fixed relative to the pivotable member 12 so that a larger sheet of document cannot be well clamped because there is less space between the clamp means 13 and the monitor. At position Y or Z could be hit by the persons passing by the monitor. Furthermore, if the sheet of the document clamped on the clamp means 13 is compact and the user wants to position the sheet of document in front of the monitor, the conventional file holder cannot shift the clamp means 13 to the desired position.

The present invention intends to provide a file holder which includes two pivotable members pivotably connected with each other and the clamp means is slidably mounted to one of the two pivotable members so that the document can be positioned at any position relative to the monitor.

By the file holder in accordance with the present invention, the disadvantages of the conventional file holder are well resolved and the two pivotable members are conveniently adjusted beside the monitor to become a compact size.

### SUMMARY OF THE INVENTION

In accordance with one aspect of the present invention, there is provided a file holder comprising an attachment member which has a first tube connected thereto so as to allow a first end of a first pivotable member to be pivotably engaged with the first tube. A second tube is connected to a second end of the first pivotable member. A second pivotable member has a first end thereof pivotably engaged with the second tube. A sleeve is slidably mounted to the second pivotable member and a clamp means is mounted to the sleeve.

The primary object of the in accordance with the present invention is to provide a file holder having two pivotable members which are pivotable relative two different axes so that the document can be shifted to a desired position conveniently.

These and further objects, features and advantages of the present invention will become more obvious from the following description when taken in connection with the accompanying drawings which show, for purposes of illustration only, several embodiments in accordance with the present invention.

### BRIEF DESCRIPTION OF THE DRAWINGS

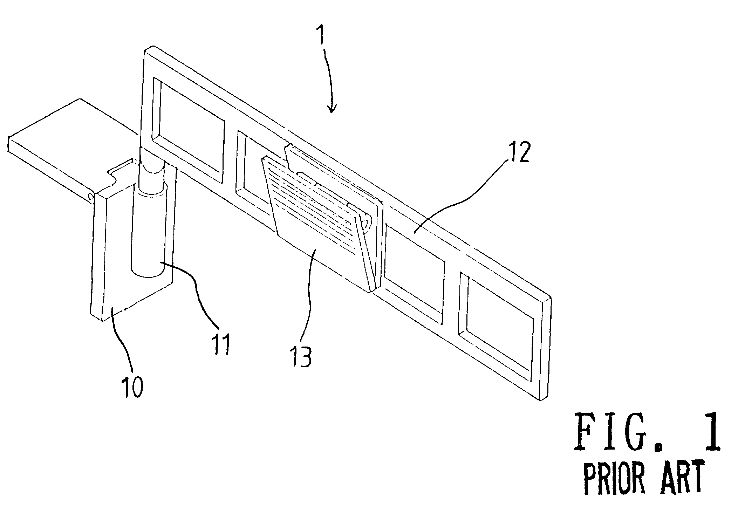

Fig. 1 is a perspective view to show the conventional file holder;
Fig. 2 is an illustrative view to show the positions that the conventional file holder is able to be located;
Fig. 3 is an exploded view to show the file holder in accordance with the present invention;
Fig. 4 is an exploded view to show the file holder in accordance with the present invention and a fixed plate;
Fig. 5 is a perspective view to show the file holder of the present invention is attached to a side of a monitor;
Fig. 6 is an illustrative view to show the file holder wherein the sleeve is not pulled away from the first pivotable member;
Fig. 6A is an illustrative view to show the file holder wherein the sleeve is pulled away from the first pivotable member;
Fig. 7 is a an illustrative view to show that the clamp means on the second pivotable member is shifted in front of the monitor, and

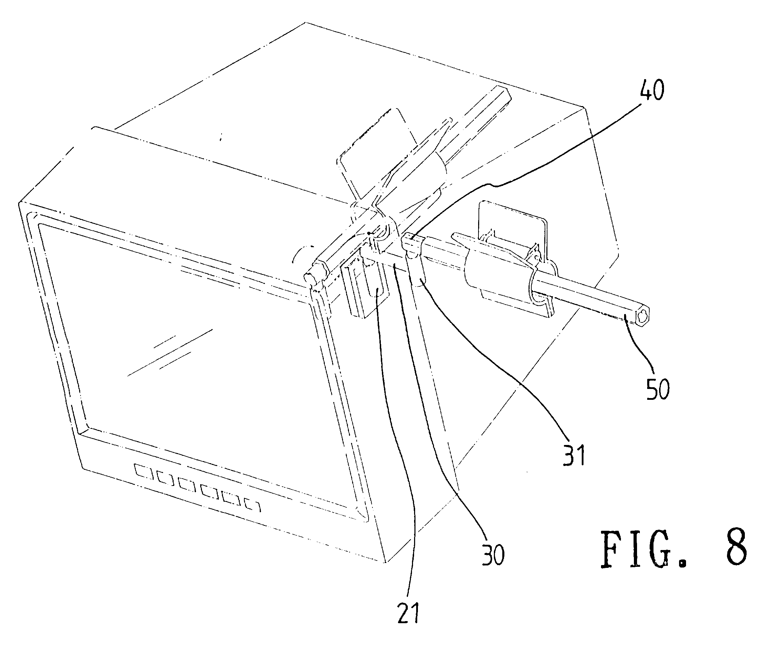

Fig. 8 is an illustrative view to show that the two pivotable members are respectively pivoted to become a compact size.

### DETAILED DESCRIPTION OF THE PREFERRED EMBODIMENT

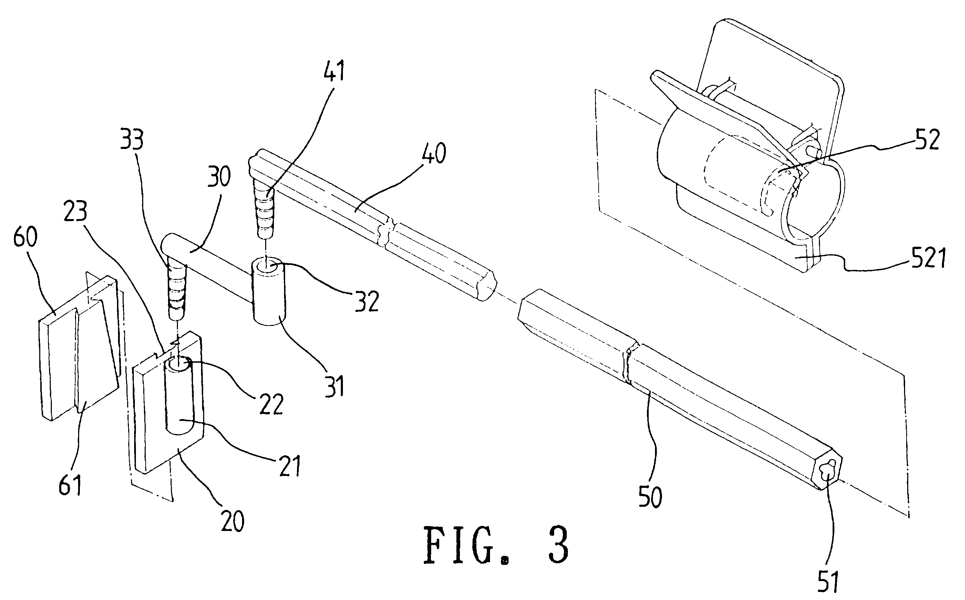

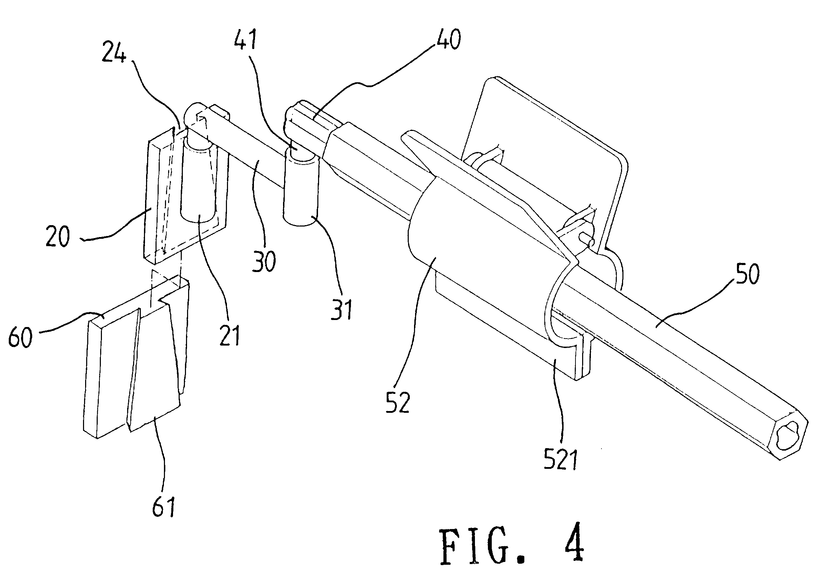

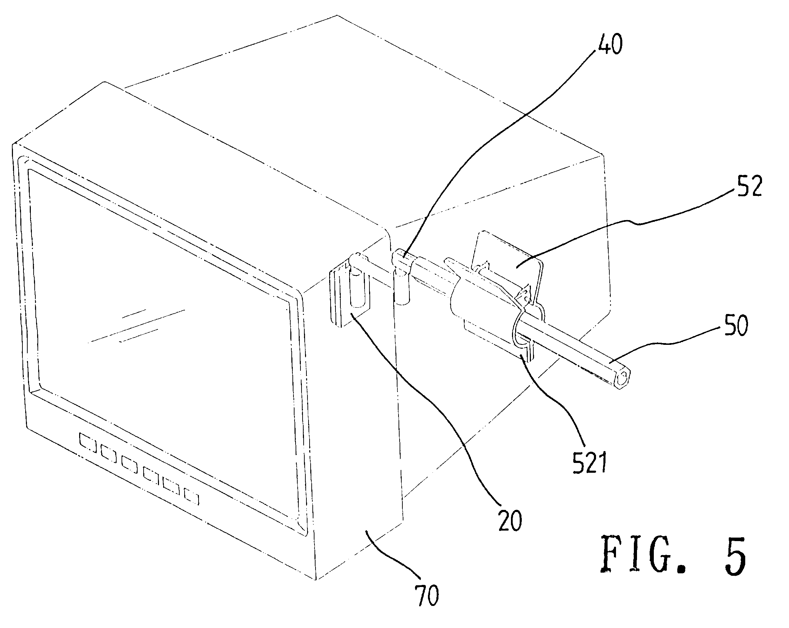

Referring to Figs. 3 to 5, the file holder in accordance with the present invention comprises an attachment member 20 having a first tube 21 connected to a first surface thereof and a taper-shaped groove 23 defined in a second surface thereof. A fixed plate 60 fixedly connected to a side of a monitor 70 has a taper-shaped block 61 extending therefrom so as to be engaged with the taper-shaped groove 23.

A first pivotable member 30 has a first insertion 23 extending from a first end of the first pivotable member 30 so as to be pivotably engaged with a hole 22 in the first tube 21. A second tube 31 is connected to a second end of the first pivotable member 30 and has a hole 32 defined therein. A second pivotable member 40 has a second insertion 41 extending from a first end of the first pivotable member 30 so as to be pivotably engaged with the hole 32 in the second tube 31. The second pivotable member 40 is a polygonal rod and a sleeve 50 has a polygonal hole 51 defined therethrough so that the sleeve 50 is slidably mounted to the polygonal rod of the second pivotable member 40. A clamp means 52 is mounted to the sleeve 50. The clamp means 52 has two clamping members 521 connected thereto so as to clamp papers or documents.

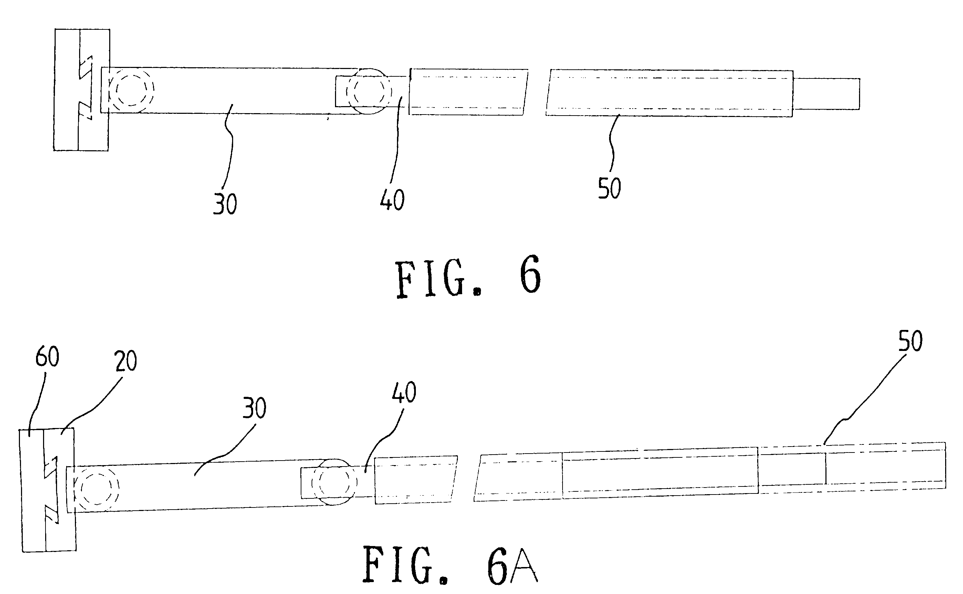

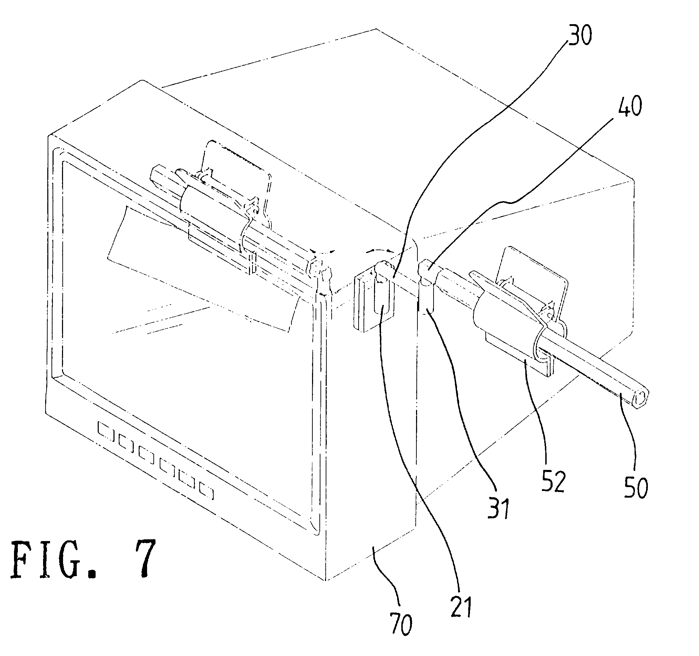

As shown in Figs. 6 and 6A, the sleeve 50 can be slid along the polygonal rod of the second pivotable member 40 so that when the document clamped by the clamp means 52 is a large sheet, the sleeve 50 together with the clamp means 52 are slid along the polygonal rod so that the large sheet of the document can be expanded. This is convenient for the user to read the document. As shown in Fig. 7, when the sheet of the document is small and the user wants the document is positioned in front of the monitor 70, the first pivotable member 30 and the second pivotable member 40 are respectively pivoted about the two tubes 21, 31 to move the clamp means 52 in front of the monitor 70. When the file holder is not in use, the first pivotable member 30 and the second pivotable member 40 are respectively pivoted toward different directions so as to make the file holder be a compact size and positioned beside the monitor 70.

Accordingly, the file holder of the present invention provides two pivotable members 30, 40 which are pivoted about different two tubes 21, 31 so as to be conveniently position the clamp means 52 at desired position. The slidable clamp means 13 allows the user to expand a large sheet of document while the document is still held on the file holder.

While we have shown and described various embodiments in accordance with the present invention, it should be clear to those skilled in the art that further embodiments may be made without departing from the scope and spirit of the present invention.

A file holder includes an attachment member for being attached to a monitor. A first pivotable member is pivotably connected to a first tube on the attachment member, and a second pivotably member is pivotably connected to a second tube on the first pivotable member. A clamp device is slidably mounted to the second pivotable member. The first pivotable member is pivotable about the first tube on the attachment member, the second pivotable member is pivotable about the second tube on the first pivotable member so that the clamp device is easily shifted to a desired position.

## Claims

1. A file holder comprising:
an attachment member having a first tube connected thereto;
a first pivotable member having a first end thereof pivotably engaged with said first tube and a second tube connected to a second end of said first pivotable member;
a second pivotable member having a first end thereof pivotably engaged with said second tube, and
a sleeve slidably mounted to said second pivotable member and a clamp means mounted to said sleeve.

2. The file holder as claimed in claim 1 further comprising a fixed plate having a taper-shaped block extending therefrom, said attachment member having a taper-shaped groove defined therein, said taper-shaped block engaged with said taper-shaped groove.

3. The file holder as claimed in claim 1, wherein said second pivotable member is a polygonal rod and said sleeve has a polygonal hole defined therethrough so that said sleeve is slidably mounted to said polygonal rod of said second pivotable member.
